# EUROPEAN PATENT SPECIFICATION

(11) **EP 2 476 316 B1**
(45) Date of publication and mention of the grant of the patent: **28.09.2016**
(21) Application number: 11151099.6
(22) Date of filing: 17.01.2011
(51) Int. Cl.: A23L 31/00

(54) **METHOD FOR TREATING AND PRESERVING MUSHROOMS**
VERFAHREN ZUR BEHANDLUNG UND KONSERVIERUNG VON PILZEN
PROCÉDÉ POUR LE TRAITEMENT ET LA CONSERVATION DE CHAMPIGNONS

(43) Date of publication of application: 18.07.2012
(73) Proprietor: Sociedad Cooperativa Champinter, 02270 Villamalea, Albacete (ES)
(72) Inventor: Correa Arango, M Catalina, 02270 Albacete, (ES); Mendoza De Gracia, Ms. Maria Francisca, 02270 Albacete, (ES)
(74) Representative: PROPI, S.L.

(56) References cited:
- EP-A1- 1 574 135
- WO-A1-99/17624
- WO-A1-03/001923
- WO-A2-2008/045490
- CN-A- 1 255 289
- CN-A- 1 853 490
- CN-A- 101 228 892
- CN-A- 101 258 869
- CN-A- 101 352 188
- CN-A- 101 715 806
- CN-A- 101 720 812
- CN-A- 101 904 348
- ES-A1- 2 298 045
- US-A- 4 066 795
- US-A1- 2009 304 880
- YOUN-MOON PARK ET AL: "Evaluation of storability and shelf life of oyster mushroom under simulated shipment and marketing environments.", JOURNAL OF THE KOREAN SOCIETY FOR HORTICULTURAL SCIENCE 2004 SCH. OF BIORESOURCE SCI., ANDONG NAT. UNIV., ANDONG 760-749, KOREA, vol. 45, no. 1, 2004, pages 9-15, XP8136844,

## Description

### Object of the invention

The present invention relates to a method for treating and preserving mushrooms, wherein through a minimal processing within a specific temperature range and using a preservative during washing, a product ready to be eaten without changing its properties, and preserving its appearance and whiteness from process to retail is obtained.

### Background of the invention

The mushroom is one of the most commonly consumed funguses, because it has a plurality of remineralizing properties in addition to have a pleasant taste and easy preparation.

The nutritional content of the mushroom will be conditioned by the type of mushroom, if it is wild or cultivated, if it grows in wet medium or not, with more or less organic matter, and specially, by the type of substrate into which it is cultivated. Its content includes more than 80% of water, proteins, carbohydrates and a minimum fraction of fats, being these also very healthy. Specially outstanding, its content of selenium, phosphorus, magnesium and potassium. It also contains small amounts of vitamin A, C, B1 and D.

The caloric content of the mushroom is low, being very suitable in cleansing or weight loss diets. Its insoluble fiber intake promotes a satiating effect, being very healthy and containing no cholesterol.
As mentioned, the mushroom has a high moisture content, which makes it susceptible to microbiological attack, enzymatic browning reactions and mechanical injury, due to its porous and thin epidermal structure; whereby these are classified as few perishable products.

Different methods are known for processing and packaging mushrooms. Document ES 2298045 describes for example a method for preserving fresh mushrooms, among different methods for preserving plant products, based on the removal of soil and other foreign materials at room temperature, by cutting and washing, followed by immersing thereof for 10 to 30 seconds, for their surface treatment, into an aqueous solution of citric acid and ascorbic acid with a pH between 4 and 7, followed by a dripping stage for 6 to 15 minutes, these being packaged into trays and covered with a micro-perforated film, the trays being sealed with the product thus covered and then passed to a refrigerated storage for 14 days.

Documents CN 101 904348 A, CN 1 853490 A, CN 101 715806 A and CN 101 228892 A disclose a process for treating and preserving mushrooms, wherein a mushroom pre-cooling is conducted for at least two hours at a temperature between 3-7 °C and a relative humidity of 70-80%, mushrooms are washed by spraying a mixture of water and preservative, at a temperature within the range of 3-7 °C, followed by a drying stage maintaining the temperature of 3-7°C and are hermetically packaged and stored, all while maintaining the temperature of 3-7 °C.

CN 1 255 289 A discloses a process for treating and preserving mushrooms, wherein mushrooms are rinsed in an aqueous solution for 3-5 minutres, treated with an antistaling liquid, dryed, pre-cooled, loaded into an antistaling bag containing CO₂, O₂ and N₂, sealed and packed, all while maintaining the temperature of 1-5 °C.Description of the invention

The proposed invention relates to a method for treating and preserving mushrooms, wherein a product that maintains its characteristics, color, texture, appearance, etc., from the process to retail is obtained, so that it does not break the cold chain by maintaining its refrigeration temperature from 3 to 7°C at all times. Also, a preservative that helps maintaining the initial properties is included into the washing water.

In any procedure there are earlier stages for cultivating and harvesting and transporting. Mushrooms should be harvested before the veil covering the hymenium had been broken. The proper way for performing the harvesting is by gently taking the pileus between the fingers giving the hand a twisting motion. Some mycelium and casing soil remains will be attached to the foot, thus the foot has to be cut and placed on harvesting plane tables with the pileus downward, and taking special care in its handling so as not to suffer physical injuries.

In the same way, mushrooms sized between 3-5 are used in order to perform a proper slicing, these should be free from any type of contamination by microorganisms and pests, any mechanical injury, having a consistent texture so as not to get flatten when cutting is performed, these should have no excessive moisture, and have to be a white to creamy color both inside and outside.

These must be quickly transported from crops to the cooperative preferably in the earlier morning hours, the subsequent refrigeration thereof being more properly performed, and ensuring the freshness in order to obtain excellent quality products.

As for the reception, when the product arrives, the load weighting is performed through scales. During this operation a label, wherein the date, time, weight and a reference matching a membership number are recorded, thus identifying each farmer consignment, is made.

During the product reception, a random box of each consignment delivered by the membership is selected, in order to determine the quality thereof.

At this stage, mushrooms are transferred to fridge chambers, after their reception, it is very important to perform this task as quickly as possible in order to prevent the product oxidation.

It is important to mention that pre-cooling, in addition to ensure extending the mushroom life and better withstanding its further handling, also makes it more resistant to microbial contamination.

The success of this stage depends on several factors such as:
- Time elapsed between harvesting and the operation itself
- Type of transport container
- Initial and final temperature of the product
- Rate or amount of cold air
- Cleaning the air to be used when reducing the temperature in order to reduce the amount of decomposition microorganism
- Maintaining the recommended temperature after pre-cooling

The performed pre-cooling method consists of introducing the product into the fridge chamber immediately after its reception for a minimum time of two hours. The pallets with the product are stacked inside the chambers, being kept under a temperature of 3-5°C and a relative humidity of 70-80%.

From the process stage to retail the product does not break the cold chain; i.e., it is kept under refrigeration temperatures between 3-7°C at all times in order to maintain its freshness characteristics in terms of color, texture, appearance, and others.

Once the mushroom has being long enough into the fridge chambers, for preventing the oxidation and better adapting to handling, the next stage that takes place is the washing. The product is manually passed to the washing machine wherein the second classification and selection is performed so as to be cleaned or taken off the casing remaining from the crop.

A washing by spraying water using different types of nozzles specially studied and tested is conducted, in order to remove dirt, and in turn cause no physical injury since mushrooms are very sensitive.

Similarly, it is vital to take special care of the water flow rate, pressure and temperature that should be between 3-7°C at all times; as well as the speed of the conveyor belt through which the mushrooms pass for being washed; which variables are modified depending on the status of each consignment and which have been tested and validated within different ranges so as different interactions do not affect the product but rather be the most appropriate according to each consignment.

It is important to consider the impact suffered by the product on the machine, and the components thereof on the product in order to minimize any type of physical injury and contamination in the product.

During washing a preservative consisting of a mixture of sodium sulfite (e-221), antioxidants such as citric acid (E-330) and sodium ascorbate (E-301), disodium and calcium EDTA sequestrant (E-385) and salt, is added. After washing, the product passes through the dryer, wherein in the same way as earlier and later stages different factors are controlled in order to obtain a product with the best possible quality, and these factors being, among others, drying rate, flow rate, and orientation of the nozzles.

Drying is carried out through 3-5 blowers each provided with two nozzles and 2-5 water sucking members in order to remove the highest water amount from the mushroom without providing heat and with the minimal contact for preventing browning and mechanical injuries.
Next, the mushrooms pass through two different lines either for being packed as a whole or in slices.

Mushrooms to be cut pass through a meshed vibrating belt to the slicing machine in order to remove remains and pieces. These are mechanically cut into slices of 3-4 mm thick.

Different specifications are also required in this process so as the slices be the proper ones, without breakage and oxidation occurring therein, nor mechanical injuries. Therefore, the type of blades should be specific, making a clean cut and in one movement, the machine must be equipped with inlet channels for performing a proper positioning of the product, among other features.

The whole or sliced mushroom passes through another meshed vibrating belt for completing the removal of the pieces, and wherein other selection of the products not fulfilling the pre-established quality specifications is performed.

As for packaging, the respiration of funguses is generally high, 200-500 mg/kg h at 20°C, compared with other vegetables and fruits, thus requiring more selective packing mechanisms promoting the maintenance of the organoleptic and nutritious characteristics. Therefore different types of packaging have been tested:
- PET tray covered with PVC film
- PEBD bag
- Micro-perforated OPP bag

Already processed mushrooms are directly collected in the containers wherein are marketed, and other quality control is manually performed.

From the laminating machine all trays directly pass through the metal detector in order to verify that these are free of ferrous, non ferrous materials and stainless steel.

And from the metal detector the trays pass to labeling wherein the product name, the species, conservation recommendations, price, packaging date, trademark, ingredients, code and bar code as well as any others deemed appropriate, are showed.

In the fresh product store the shipping and transportation are performed in refrigerated trucks for not breaking the cold chain so as the product does not lose its sensory and quality characteristics.

### Description of the drawings

For completing the description being made and in order to help to a better understanding of the features of the invention, according to a preferred example of the embodiment thereof, a set of drawings is attached as an integral part of said description, wherein with an illustrative and not limitative manner, the following has been represented:

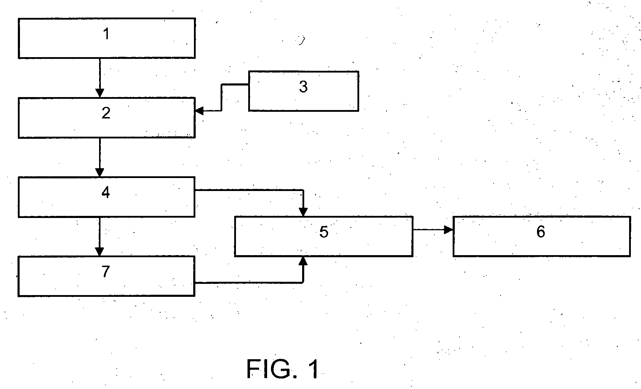

Figure 1. - shows a scheme of the method used for treating and preserving mushrooms.

### Preferred embodiments of the invention

The present invention describes a method for treating and preserving mushrooms, which maintains intact the mushroom characteristics, as well as maintaining intact their whiteness and appearance as the first day, after the tenth.

The first thing done for performing the method of the invention is a mushroom pre-cooling (1), immediately after its reception. Unlike other methods, in the one described here, this is the first stage, wherein the mushroom is pre-cooled at a temperature between 3-7°C and a relative humidity of 70-80% for at least two hours. This is a fundamental part of the method, since during the entire treatment; the temperature will never be out of this temperature range, between 3-7°C. Through which is how the best whiteness and appearance characteristics are achieved, complementing the different specifications of each stage during the entire process.

Next, and as mentioned, by maintaining the temperature within the range of 3-7°C, the mushroom is washed (2) by spraying a mixture of water and preservative (3). This used preservative (3) will be a mixture of sodium sulfite (E-221), citric acid (E-330), sodium ascorbate (E-301), disodium and calcium EDTA (E-385) and salt.

For said spraying washing (2) different types of nozzles are used for removing dirt, and in turn not causing physical injuries in the mushrooms. It is also important taking into account the flow rate, pressure, and specially, the temperature between 3-7°C as before mentioned. Also the speed of the conveyor belt through which the mushrooms pass for being washed, which variables are modified according to each consignment, except for the temperature, which has to be maintained within the mentioned range for the product to achieve the described characteristics.

After washing (2), a drying stage (4) without heat addition, since the temperature has to be kept within the range of 3-7°C, is performed. Different factors such as drying rate, flow rate, orientation of nozzles, etc. have to be taken into account. Drying (4) is performed by using 3-5 blowers each one equipped with two nozzles and 2-5 water sucking members, in order to remove the highest water amount from the mushroom without providing heat and with the minimal contact for preventing browning and mechanical injuries.

Then the mushrooms have two options, either pass directly to packaging (5), for packaging the product as a whole, or passing through a slicing stage (6), wherein the mushrooms to be cut pass through a meshed vibrating belt to the laminating machine in order to remove remains and pieces. These are mechanically cut into slices of 3-4 mm thick. The type of blades should be specific, making a clean cut and in one movement. The laminating machine must be equipped with inlet channels for performing a proper positioning of the product, among other features.

Finally, mushrooms are hermetically packaged (5), either as a whole or sliced, always keeping the temperature within the range of 3-7°C. For packaging (5), one will be chosen from the following:
PET tray covered with PVC film
PEBD bag
Micro-perforated OPP bag

From packaging (5), all trays or bags pass through a metal detector in order to verify that these are free of ferrous materials, stainless steel and others.

And then, the trays would pass to labelling. The storage (6) of the product also takes place within the range of 3-7°C. And the shipping and transportation will performed in fridge chambers for not breaking the cold chain at any time, so as mushrooms do not lose their properties.

## Claims

1. Method for treating and preserving mushrooms, **characterized in that** a mushroom pre-cooling (1) is conducted for at least two hours at a temperature between 3-7°C and a relative humidity of 70-80%, these are washed (2) by spraying a mixture of water and a mixture of sodium sulfite (E-221), citric acid (E-330), sodium ascorbate (E-301), disodium and calcium EDTA (E-385) and salt as preservative (3), at a temperature within the range of 3-7°C, followed by a drying stage (4) performed by using 3-5 blowers each one equipped with two nozzles and 2-5 sucking members, maintaining the temperature of 3-7°C, these are hermetically packaged (5) and stored (6), all while maintaining the temperature of 3-7°C.

2. Method for treating and preserving mushrooms, according to claim 1, **characterized in that** the packaging (5) is performed into one of the following: PET tray covered with PVC film, PEBD bag and micro-perforated OPP bag.

3. Method for treating and preserving mushrooms, according to any one of claims 1 or 2, **characterized in that** after drying (4) and prior to packaging (5) mushrooms can go through a slicing stage (7) with specific blades for clean cutting thereof in one movement.

## Patentansprüche

1. Verfahren zur Behandlung und Konservierung von Pilzen, **dadurch gekennzeichnet, dass** eine Pilz-Vorkühlung (1) für mindestens zwei Stunden bei einer Temperatur zwischen 3 - 7 ºC und einer relativen Feuchtigkeit von 70 - 80 % durchgeführt wird, diese werden durch Absprühen mit einer Mischung aus Wasser und einer Mischung aus Natriumsulfit (E-221), Zitronensäure (E-330), Natriumascorbat (E-301), Dinatrium und Calcium EDTA (E-385) und Salz als Konservierungsmittel (3), bei einer Temperatur im Bereich von 3 - 7 ºC gewaschen (2), gefolgt von einer Trocknungsphase (4), die unter Einsatz von 3 - 5 Gebläsen, die jeweils mit zwei Düsen und 2 - 5 Absaugteilen ausgestattet sind, ausgeführt wird, wobei die Temperatur von 3 - 7 ºC aufrechterhalten wird, diese werden hermetisch verpackt (5) und gelagert (6), wobei die ganze Zeit die Temperatur von 3 - 7 ºC aufrechterhalten wird.

2. Verfahren zur Behandlung und Konservierung von Pilzen, nach Anspruch 1, **dadurch gekennzeichnet, dass** die Verpackung (5) in einer der folgenden Arten ausgeführt wird: PET Schale ausgelegt mit PVC-Folie, PEBD-Beutel und mikroperforierte OPP-Beutel.

3. Verfahren zur Behandlung und Konservierung von Pilzen, nach einem der Ansprüche 1 oder 2, **dadurch gekennzeichnet, dass** nach der Trocknung (4) und vor der Verpackung (5) die Pilze eine in Scheiben schneidende Phase (7) mit speziellen Klingen für das saubere Schneiden davon mit einer einzigen Bewegung durchlaufen können.

## Revendications

1. Procédé pour le traitement et la conservation des champignons, **caractérisé en ce qu'**un pré-refroidissement (1) des champignons est effectué pendant au moins deux heures à une température entre 3-7 °C et une humidité relative de 70-80 %, ces derniers sont lavés (2) en vaporisant un mélange d'eau et un mélange de sulfite de sodium (E-221), acide citrique (E-330), ascorbate de sodium (E-301), EDTA disodique et calcique (E-385) et de sel comme conservateur (3), à une température dans la plage de 3-7 ºC, suivi d'une étape de séchage (4) réalisée en utilisant 3-5 ventilateurs chacun étant équipé de deux buses et de 2-5 éléments d'aspiration, en maintenant la température de 3-7 °C, ces derniers sont hermétiquement emballés (5) et stockés (6), tout en maintenant la température de 3-7 °C.

2. Procédé pour le traitement et la conservation des champignons, selon la revendication 1, **caractérisé en ce que** l'emballage (5) est réalisé avec l'un des suivants : plateau PET recouvert d'un film PVC, poche PEBD et poche OPP micro-perforée.

3. Procédé pour le traitement et la conservation des champignons, selon l'une quelconque des revendications 1 ou 2, **caractérisé en ce qu'**après le séchage (4) et avant l'emballage (5) les champignons peuvent passer par une étape de coupe (7) avec des lames spécifiques pour une coupe propre de ces derniers en un seul mouvement.
